(19) **Europäisches Patentamt**

**European Patent Office**

**Office européen des brevets**

(11) Veröffentlichungsnummer: **0 417 337 B1**

(12) **EUROPÄISCHE PATENTSCHRIFT**

(45) Veröffentlichungstag der Patentschrift: **29.12.93**

(51) Int. Cl.⁵: **G05B 19/415**

(21) Anmeldenummer: **89116811.4**

(22) Anmeldetag: **11.09.89**

(54) Verfahren zum Betrieb einer numerisch gesteuerten Werkzeugmaschine oder eines Roboters.

(43) Veröffentlichungstag der Anmeldung:
**20.03.91 Patentblatt 91/12**

(45) Bekanntmachung des Hinweises auf die
Patenterteilung:
**29.12.93 Patentblatt 93/52**

(84) Benannte Vertragsstaaten:
**CH DE LI NL**

(56) Entgegenhaltungen:

**WERKSTATTSTECHNIK, ZEITSCHRIFT FUR IN-
DUSTRIELLE FERTIGUNG. vol. 76, no. 5, Mai
1986, BERLIN DE Seiten 309 - 312; J.Huan:
"Spline-Interpolation in der Steuerung einer
Werkzeugmaschine"**

(73) Patentinhaber: **SIEMENS AKTIENGESELL-
SCHAFT
Wittelsbacherplatz 2
D-80333 München(DE)**

(72) Erfinder: **Distler, Heinz, Dipl.-Ing.
Am Bauernfeld 13
D-8500 Nürnberg(DE)**

## Beschreibung

Die Erfindung bezieht sich auf ein Verfahren zum Betrieb einer numerisch gesteuerten Werkzeugmaschine oder eines Roboters, wobei jeweils unter Zugrundelegung mehrerer aufeinanderfolgender Raumpunkten anhand deren Achsparameterwerten als Stützorten interpolierbare glatte Bahnabschnitte gebildet werden, die in ihrer Aneinanderkettung den Sollverlauf einer angestrebten Bewegungsbahn vorgeben, wobei der Sollverlauf für jede Achse den jeweiligen Achsparameter als abhängige Veränderliche eines Bahnlängenparameters der angestrebten Bewegungsbahn angibt.

Das Erzeugen von glatten Konturen, die nur mit wenigen Stützpunkten vorgegeben sind, erfolgt bei handelsüblichen numerischen Steuerungen dadurch, daß die Sollkonturen unter Zuhilfenahme relativ weniger Stützpunkte durch spezielle Spline-Interpolationen zu glatten Kurvenverläufen verbunden werden. Dazu werden die einzelnen Kurvensegmente mit jeweils gleicher Steigung und gleicher Krümmung aneinandergesetzt. So entstehen weiche Übergänge. Ein hierzu geeignetes Verfahren der eingangs genannten Art ist aus der Zeitschrift "Werkstatt und Betrieb" 121 (1988) 9, Seite 737, bekannt.

Die Tatsache, daß dabei jedem Splineabschnitt jedoch nur eine einzige Bahngeschwindigkeit vorgegeben werden kann, führt allerdings dazu, daß bei Vorgabe eines dynamischen Geschwindigkeitsprofils die Länge eines ansonsten jeweilig möglichen Splineabschnittes begrenzt sein muß.

Aufgabe der Erfindung ist, ein Verfahren der eingangs genannten Art so auszubilden, daß in möglichst freizügiger Art und Weise Geschwindigkeitsprofile längs einer durch Splineabschnitte gegebenen Bewegungsbahn vorgegeben werden können.

Gemäß der Erfindung wird diese Aufgabe zum einen dadurch gelöst, daß die Schrittweite unter welcher die jeweiligen Bahnparameter entsprechend den Sollverläufen nacheinander verändert werden, um die jeweils zugeordneten Achsparameterwerte abzufragen, mit steigender Bahngeschwindigkeit verringert wird.

Zum andern wird die Aufgabe dadurch gelöst, daß unter Beibehalten einer konstanten Schrittweite unter welcher die jeweiligen Bahnparameter entsprechend den Sollverläufen nacheinander verändert werden, um die jeweils zugeordneten Achsparameterwerte abzufragen, der jeweilige Sollverlauf entsprechend einem gewünschten Geschwindigkeitsprofil über den Verlauf des Bahnlängenparameters umgekehrt proportional zur gewünschten Bahngeschwindigkeit gedehnt wird.

In beiden Fällen wird auch dann, wenn mehrere Achsen die angestrebte Bewegungsbahn in ihrem Zusammenspiel ergeben, sichergestellt, daß die aufeinanderfolgenden Raumpunkte stets eingehalten werden. Denn sowohl das Variieren der Schrittweite längs des Bahnlängenparameters wie auch ein partielles Dehnen des Bahnlängenparameters verändern die Konturtreue der angestrebten Bewegung in keiner Weise. Eben hierin liegt eine überraschende Erkenntnis der Erfindung.

Eine weitere, technisch ausgesprochen einfache Lösung der Erfindung ist dadurch gekennzeichnet, daß unter Beibehaltung einer konstanten Schrittweite, unter welcher die jeweiligen Bahnparameter entsprechend dem Sollverlauf nacheinander verändert werden, um die jeweils zugeordneten Achsparameterwerte abzufragen, der Abstand zwischen den Stützorten umgekehrt proportional zur gewünschten Bahngeschwindigkeit gedehnt wird. Diese Maßnahme ermöglicht allerdings nur eine relativ grobe Variation des Geschwindigkeitsprofils innerhalb eines Splineabschnittes, wobei jedoch sichergestellt ist, daß keine Geschwindigkeitssprünge auftreten.

Eine Ausbildung der Erfindung ist dadurch gekennzeichnet, daß die tatsächliche Bahnlänge zwischen den Raumpunkten als Parameter in ein jeweiliges, den Betrieb steuerndes Programm eingegeben wird. Eine Vorgabe der tatsächlichen Bahnlänge ermöglicht eine genauere Vorgabe von Geschwindigkeitsprofilen, als dies dann möglich ist, wenn die jeweiligen aus sämtlichen möglichen Stützpunkten sich ergebenden linearen Abstände als Maß für die Bahnlänge herangezogen werden.

Ein Ausführungsbeispiel der Erfindung ist in der Zeichnung dargestellt und wird im folgenden näher erläutert. Dabei zeigen:

FIG 1     ein Blockschaltbild,
FIG 2     eine Bahnkonfiguration,
FIG 3     eine Tabelle zu ausgewählten Stützpunkten,
FIG 4     Sollverläufe von Achsparametern in Abhängigkeit von einem Bahnlängenparameter,
FIG 5     ein Geschwindigkeitsdiagramm,
FIG 6     eine erste Programmliste,
FIG 7     eine weitere Programmliste,
FIG 8     ein Achsparameter-Bahnparameter-Diagramm und
FIG 9     ein zugehöriges Geschwindigkeitsdiagramm.

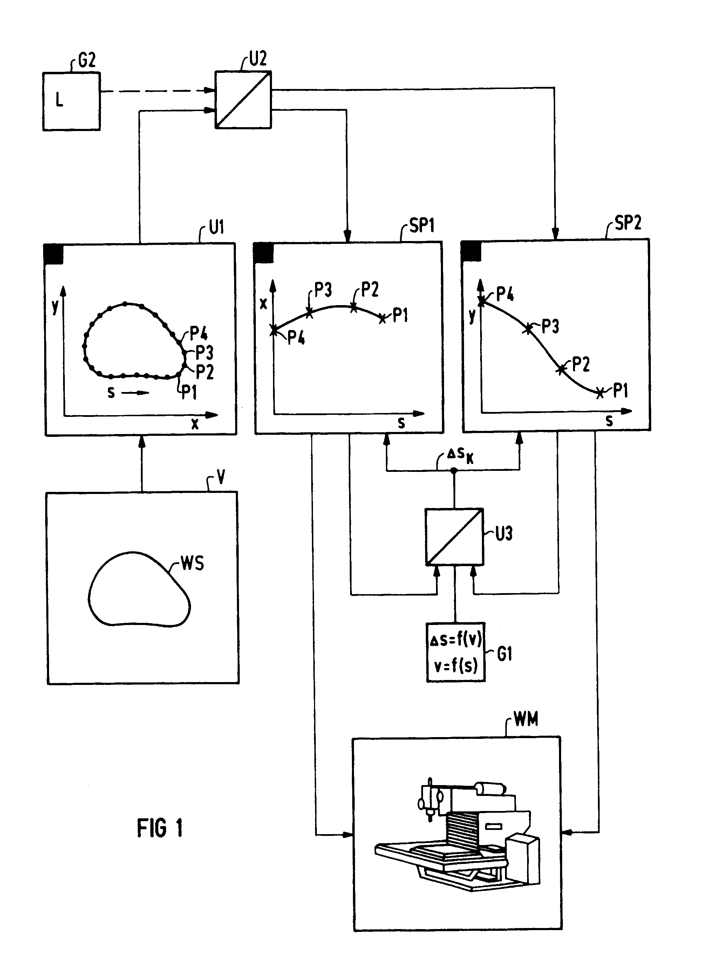

In der Darstellung gemäß FIG 1 ist in Form einer Blockstruktur gezeigt, wie die Kontur eines Werkstückes WS, die als Vorlage V gegeben sein kann, umgesetzt wird, um die Achsen einer Werkzeugmaschine WM anzusteuern.

Die Vorlage V, sei es eine Druckvorlage oder ein Modell, wird dabei mit Hilfe eines Umsetzers U1 abgetastet und von diesem Umsetzer U1 wird die ideale Bewegungsbahn von einem Ausgangsort als erstem, bis zu einem Zielort als letztem Ort in Feinwegabschnitte aufgelöst. Bei der geschlossenen Kontur fallen dabei Ausgangsort und Zielort zusammen. Die Feinwegabschnitte können dabei etwa äquidistant zueinander gewählt sein. Ferner werden im Umsetzer U1 die Koordinaten sämtlicher Orte der idealen Bewegungsbahn gespeichert. Als Achsparameter sind dabei Größen x und y vorgesehen, die jeweils einem Bahnlängenparameter s zugeordnet sind. Im Ausführungsbeispiel sei angenommen, daß die Auflösung in Feinwegabschnitte zu den in der Darstellung durch dicke Punkte angeordneten Stützorten führen würde.

Für sogenannten "Spline"-Verfahren ist es typisch, daß jeweils durch vier Stützorte ein Splineabschnitt gebildet wird, wobei die Summe aller Splineabschnitte die gesamte Kontur des Werkstückes WS umschließt.

Im Ausführungsbeispiel sind als Stützorte die Stützorte P1 bis P4 bezeichnet, die einen einzelnen Splineabschnitt umschließen, auf den in der weiteren Darstellung ausführlich eingegangen wird. Die Bearbeitung der weiteren Splineabschnitte würde entsprechend verlaufen. Eine Möglichkeit, die Länge der Splineabschnitte bedarfsweise abhängig von einem Toleranzkriterium auszuwählen, ist in der europäischen Patentanmeldung 89103535.4 beschrieben. Dabei wird auch geschildert, daß es möglich ist, die Splines sowohl nach dem sogenannten Newton-Verfahren als auch nach dem Verfahren der natürlichen Splines zu bestimmen. Im folgenden wird der Übersichtlichkeit halber das erfindungsgemäße Verfahren unter Zugrundelegung der Stützorte P1 bis P4 anhand des Newton-Verfahrens geschildert, wobei dieses Verfahren aus "Bartsch/Mathematische Formeln", Buch-Zeit-Verlagsgesellschaft mbH, Köln, 1968, Seite 107, bekannt ist.

Entsprechend dem dort geschilderten funktionellen Zusammenhang des Newton-Verfahrens werden in einem Umsetzer U2 zum einem für die x-Achsparameter und zum anderen für die y-Achsparameter zusammen mit den jeweils zugeordnete Bahnlängenparametern s die jeweils durch die vier Stützorte sich ergebenen Splines ermittelt und in einem Speicher SP1 (Achse x) und einem Speicher SP2 (Achse y) abgelegt. Da der Bahnlängenparameter s streng genommen jeweils als Restweg aufzuweisen ist, führt dies dazu, daß in dem, dem Symbol für die Speicher SP1 und SP2 zugeordneten Diagramm die Stützorte P4 bis P1 jeweils von links nach rechts aufeinander folgen. Beim Abfahren der Bahnkurve wird nun fortlaufend zu aufeinanderfolgenden Werten des Bahnlängenparameters s der jeweilige Achsparameter x bzw. y aus dem Speicher SP1 bzw. SP2 entnommen und der Werkzeugmaschine WM zugeleitet, die dementsprechend - selbstverständlich unter Hinzuziehung von Regeleinrichtungen - ihre Achsen positioniert.

Hier setzt die Erfindung ein, indem über einen Geber G1 Schrittweiten delta s vorgegeben werden, unter denen der Bahnlängenparameter s fortlaufen inkrementiert wird, um die jeweiligen Achsparameter x, y abzufragen. Die Schrittweite delta s wird dabei mit steigender Bahngeschwindigkeit verringert. Das Profil der Bahngeschwindigkeit kann dabei durch eine Beziehung v = f(s) gegeben sein. Die Schrittweite delta s kann dabei in einem Umsetzer U3 noch dahingehend korrigiert werden, daß aus mehreren kathesischen Koordinaten sich ergebende zusammengesetze Bewegungen je nach der Richtung im Koordinatensystem zu einer Variation der Geschwindigkeit führen, wie dies im folgenden noch im einzelnen geschildert wird.

In der Darstellung gemäß FIG 1 ist noch gestrichelt ein Geber G2 angedeutet, der dazu dient, dem Umsetzer U2 gegebenenfalls eine echte Information darüber zu geben, wieweit die Länge der Bewegungbahn zwischen den einzelnen Stützorten tatsächlich ist. Sofern ein solcher Geber nämlich nicht vorgesehen wäre, würde diese jeweils durch die Länge der direkten Verbindung zwischen den aufeinanderfolgenden Stützorten mathematisch bestimmt. Insofern ermöglicht die Eingabe dieser tatsächlichen Bahnlänge eine genauere Aussage über die tatsächlichen Umstände und damit eine genauerer Steuerung der Geschwindigkeit.

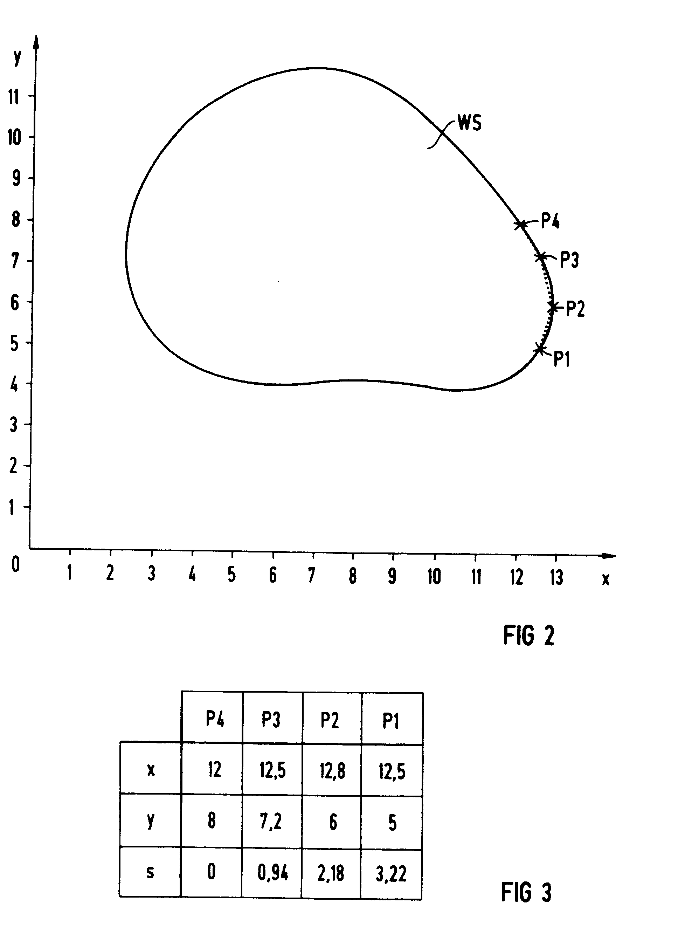

In der Darstellung gemäß FIG 2 ist ein Diagramm gezeigt, das im wesentlichen in vergrößerter Form gegenüber der Darstellung im Blockschaltbild nach FIG 1 die Stützorte P1 bis P4 des Werkstücks WS zeigt. Gestrichelt ist dabei die jeweils gradlinige Verbindung zwischen den Stützorten P1 und P2, P2 und P3 bzw. P3 und P4 angedeutet. Es ist dabei ersichtlich, daß diese gradlinige Verbindung in ihrer Länge um so mehr von der tatsächlichen Bahnlänge Restbahnlänge s abweicht, je größer die Krümmung des Werkstückes WS ist.

In FIG 3 ist eine Tabelle gezeigt, welche für die Punkte P1 bis P4 sowohl die Werte der x-Achsparameter und y-Achsparameter als auch die jeweils zugehörigen Bahnlängenparameter s aufführt. Unter dem Bahnlängenparameter s wird dabei jeweils der Bahnlängenrestweg verstanden, so daß es ersichtlich ist, daß beim Abfahren von Punkt 1 über den Punkt 2 und Punkt 3 zum Punkt 4 am Punkt 4 ein Restweg s = 0 vorliegt. Am Punkt P1 liegt ein Restweg 3,22 vor, der sich durch die Addition der drei in FIG 2 gestrichelt angedeuteten Wege ergibt.

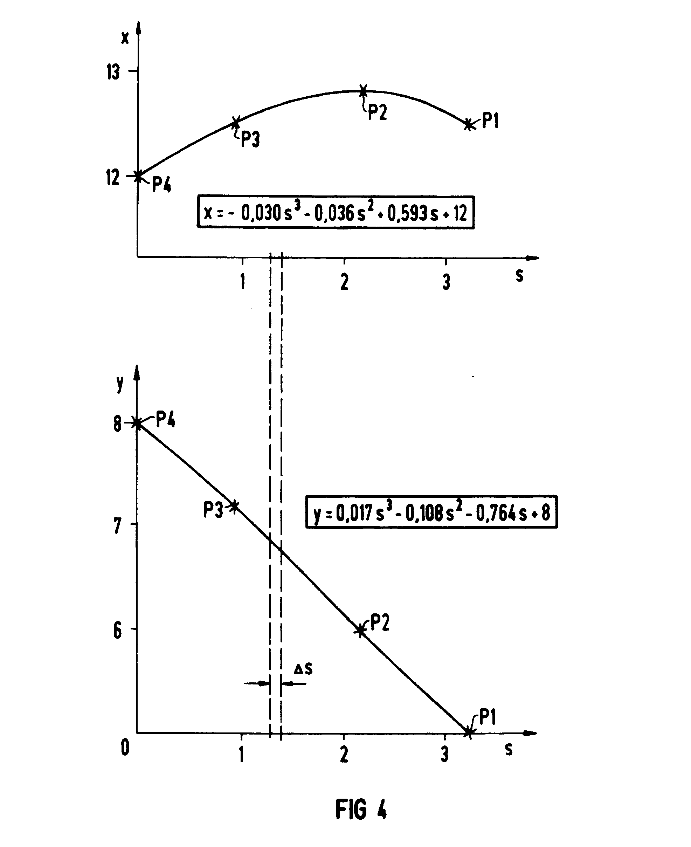

In der Darstellung gemäß FIG 4 ist im oberen Teil der Achsparameters y über die Bahnlänge s, genaugenommen die Bahnrestlänge, und im unteren Teil in entsprechender Weise der Verlauf des y-Achsparameters über die Restweglänge s gezeigt. Unter Ansatz des Newton-Verfahrens ergibt sich aus den den Stützorten P4 bis P1 zugeordneten Werten des x-Achsparameters und des Bahnlängenparameters s der mathematische Zusammenhang

$$x = -0{,}030 \, s^3 - 0{,}036 \, s^2 + 0{,}593 \, s + 12.$$

Für den y-Achsparameter ergibt sich in entsprechender Weise der mathematische Zusammenhang

$$y = 0{,}017 \, s^3 - 0{,}108 \, s^2 - 0{,}764 \, s + 8.$$

Durch gestrichelte Linien ist in der Darstellung gemäß FIG 4 gezeigt, daß beim Abfragen der x- bzw. y-Achsparameter jeweils in Schrittweiten delta s vorgegangen wird. Die Schrittweiten delta s können nun, wie bereits eingangs geschildert, durch ein Geschwindigkeitsprofil links des Bahnlängenparameters s variiert werden. Dabei ist aber auch sichergestellt, daß die Stützorte P1, P2, P3 und P4 eingehalten werden.

Anstelle einer Variation der Schrittweite delta s wäre es aber auch möglich, die Kurvenzüge nach FIG 4 entsprechend dem geforderten Geschwindigkeitsprofil zu dehnen. Diese Maßnahme ist in der Zeichnung der Übersichtlichkeit halber nicht weiter dargestellt.

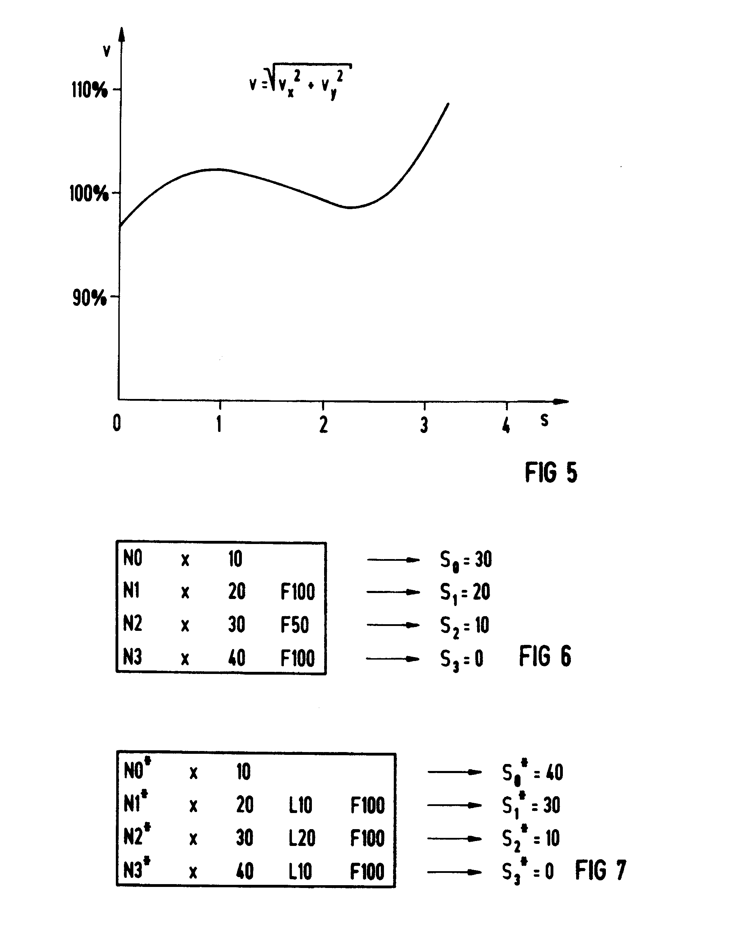

In der Darstellung gemäß FIG 5 ist ein weiterer Aspekt zur Ausbildung der Erfindung gezeigt, indem dort dargestellt ist, daß bei einer angenommenen gleichmäßigen Schrittweite delta s aufgrund des Zusammenwirkens der kathesisch angeordneten Achsen x und y eine Abhängigkeit der resultierenden Geschwindigkeit vorliegt. Es ergibt sich:

$$v = (v_x^2 + v_y^2)^{0{,}5}$$

Dieser Zusammenhang ist Basis für die Arbeitsweise des Umsetzers U3 gemäß FIG 1, denn eben aufgrund einer inversen Kennlinie zur o.g. Funktion ist es möglich, eine Linearisierung vorzunehmen.

Eine ausgesprochen einfache Möglichkeit innerhalb eines einzelnen Splinesatzes, der durch jeweils vier Stützorte gegeben ist, eine Variation der jeweils vorzunehemenden Geschwindigkeit zu erreichen, ist jedoch auch dadurch gegeben, daß unter Beibehaltung einer konstanten Schrittweite, unter welcher die jeweiligen Bahnparameter entsprechend dem Sollverlauf nacheinander verändert werden, um die jeweils zugeordneten Achsparameterwerte abzufragen, der Abstand zwischen den Stützorten umgekehrt proportional zur gewünschten Bahngeschwindigkeit gedehnt wird. Um diesen Sachverhalt zu erläutern, wird eine in nur einer Achsrichtung zu verfahrende Bewegung angenommen.

So ist in der Dargestellung gemäß FIG 6 in vier aufeinanderfolgenden Sätzen N0 bis N3 gezeigt, daß von einem Ort x = 10 über Orte x = 20 und x = 30 ein Ort x = 40 anzufahren ist. Die jeweils zugeordneten Bahnrestlängen $s_0$, $s_1$, $s_2$ und $s_3$ sind seitlich neben dem eigentlichen Programmausschnitt dargestellt. Die Einheiten der Dimensionen sind beim Beispiel, wie bereits schon eingangs geschehen, der Übersichtlichkeit halber nicht aufgeführt.

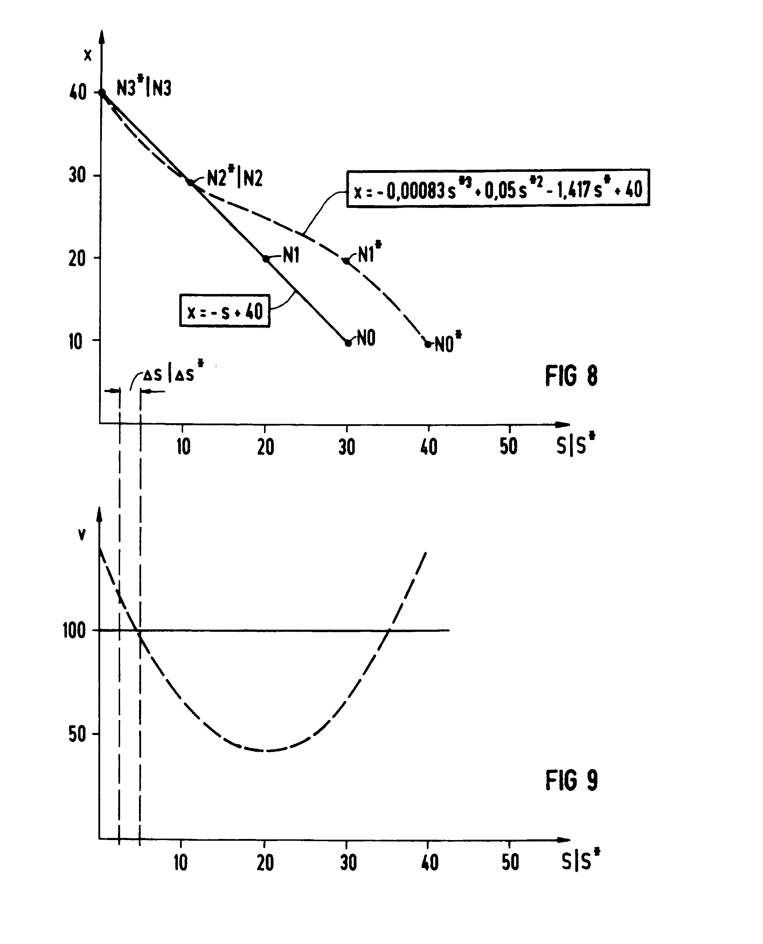

Die Geschwindigkeit im Satz N1 möge F = 100, die Geschwindigkeit im Satz N2 F = 50 und die Geschwindigkeit im Satz N3 F = 100 betragen. Prinzipiell läßt sich eine derartige Bewegung, die durch vier Orte führt, in einem Splinesatz zusammenfassen. In der Darstellung gemäß FIG 8 ist gezeigt, daß dieser Splinesatz den Zusammenhang

$$x = -s + 40$$

aufweist. In der Darstellung gemäß FIG 8 ist dies in einem Diagramm (Achsparameter x als Funktion des Bahnrestwegs s) in Form einer durchgezogenen Linie gezeigt.

Einem Splinesatz läßt sich jedoch prinzipiell nur eine Geschwindigkeit zuordnen, so daß ein Geschwindigkeitsprofil, wie es im Programm gemäß FIG 6 eigentlich gewünscht ist, nicht ohne weiteres realisierbar ist. Hier setzt die Erfindung ein, indem eine Variation des Bahnparameters s zu einem Bahnparameter s* erfolgt. In der Darstellung gemäß FIG 7 ist dazu gezeigt, daß das in der Darstellung gemäß FIG 6 angegebene Programm eine gewisse Variation erfahren kann. Der Satz N0 bleibt als Satz N0* erhalten. Der Satz N1 wird in einen Satz N1* umgesetzt, bei dem mit einem Wert L10 die jeweils tatsächlich vorliegende Bahnlänge (über Geber G2 eingebbar) eingeprägt ist, der Satz N2 wird in einen Satz N2* umgesetzt, indem eine Länge L20 eingefügt wird, die eben nicht der tatsächlichen Länge von 10 entspricht, sondern die deswegen, weil die Geschwindigkeit F100 auf F50 zu senken ist, in einen Wert L20 umgeformt wird. Der Satz N3 wird in einen Satz N3* umgeformt, indem ein Wert L10 vorliegt, wobei hier wiederum die Geschwindigkeit F100, die für den zu einem Splinsatz zusammengefaßten Bewegungsablauf typisch ist, vorliegt. Dies führt dazu, daß der Bahnlängenparameter s zu einem Bahnlängenparameter s* korrigiert wird, d.h. zum Zeitpunkt des Satzes N0* liegt ein Restweg $s_0^* = 40$ vor, mit dem Satz N1* ein Bahnrestweg $N_1^* = 30$, beim Vorliegen des Satzes N2* ein Bahnrestweg $S_2^* = 10$, und beim Vorliegen des Satzes N3* ein Bahnrestweg $s_3^* = 0$.

In der Darstellung gemäß FIG 8 sind die aus den x-Achsparametern x = 10, x = 20, x = 30 und x = 40 durch den Bahnrestweg $s_0^* = 40$, $s_1^* = 30$, $s_2^* = 10$ und $s_3^* = 0$ sich ergebenen

signifikanten Punkte als Stützorte für einen Spline angenommen, der gestrichelt angedeutet ist. Ein derartiger Spline hat den mathematischen Zusammenhang

$$x = -0{,}00083 \ s^{*3} + 0{,}05 \ s^{*2} - 1{,}417 \ s^{*} + 40.$$

In der Darstellung gemäß FIG 9 ist die Geschwinigkeit v der Bewegung über die Bahnrestweglänge s bzw. die Bahnrestweglänge s* dargestellt, letztere Beziehung durch eine gestrichelte Linie. Es zeigt sich dabei, daß eine Variation des Abstandes zwischen den Stützorten eine Variation der Bahngeschwindigkeit bedingt, die es ermöglicht, beispielsweise von einer hohen auf eine niedrige und dann wieder auf eine hohe Geschwindigkeit zu wechseln. Die gewünschten Geschwindigkeitswerte werden dabei zwar nicht ganz genau eingehalten, jedoch erweist es sich als ausgesprochen vorteilhaft, daß die Geschwindigkeitsübergänge völlig glatt verlaufen, was bei einem satzweisen Abarbeiten eines Programmes gemäß FIG 6 nicht ohne weiteres möglich wäre.

**Patentansprüche**

1. Verfahren zum Betrieb einer numerisch gesteuerten Werkzeugmaschine oder eines Roboters, wobei jeweils unter Zugrundelegung mehrerer aufeinanderfolgender Raumpunkte anhand deren Achsparameterwerten als Stützorten interpolierbare glatte Bahnabschnitte gebildet werden, die in ihrer Aneinanderkettung den Sollverlauf einer angestrebten Bewegungsbahn vorgeben, wobei der Sollverlauf für jede Achse den jeweiligen Achsparameter als abhängige Veränderliche eines Bahnlängenparameters der angestrebten Bewegungsbahn angibt, **dadurch gekennzeichnet,** daß die Schrittweite (delta s) unter welcher die jeweiligen Bahnparameter (s) entsprechend den Sollverläufen nacheinander verändert werden, um die jeweils zugeordneten Achsparameterwerte abzufragen, mit steigender Bahngeschwindigkeit (v) verringert wird.

2. Verfahren zum Betrieb einer numerisch gesteuerten Werkzeugmaschine oder eines Roboters, wobei jeweils unter Zugrundelegung mehrerer aufeinanderfolgender Raumpunkte anhand deren Achsparameterwerten als Stützorten glatte interpolierbare Bahnabschnitte gebildet werden, die in ihrer Aneinanderkettung den Sollverlauf einer angestrebten Bewegungsbahn vorgeben, wobei der Sollverlauf für jede Achse den jeweiligen Achsparameter als abhängige Veränderliche eines Bahnlängenparameters der angestrebten Bewegungsbahn angibt, **dadurch gekennzeichnet,** daß unter Beibehalten einer konstanten Schrittweite (delta s) unter welcher die jeweiligen Bahnparameter (s) entsprechend den Sollverläufen nacheinander verändert werden, um die jeweils zugeordneten Achsparameterwerte abzufragen, der jeweilige Sollverlauf entsprechend einem gewünschten Geschwindigkeitsprofil über den Verlauf des Bahnlängenparameters umgekehr proportional zur gewünschten Bahngeschwindigkeit gedehnt wird.

3. Verfahren zum Betrieb einer numerisch gesteuerten Werkzeugmaschine oder eines Roboters, wobei jeweils unter Zugrundelegung mehrerer aufeinanderfolgender Raumpunkte anhand deren Achsparameterwerten als Stützorten glatte interpolierbare Bahnabschnitte gebildet werden, die in ihrer Aneinanderkettung den Sollverlauf einer angestrebten Bewegungsbahn vorgeben, wobei der Sollverlauf für jede Achse den jeweiligen Achsparameter als abhängige Veränderliche eines Bahnlängenparameters der angestrebten Bewegungsbahn angibt, **dadurch gekennzeichnet,** daß unter Beibehaltung einer konstanten Schrittweite (delta s) unter welcher die jeweiligen Bahnparameter entsprechend dem Sollverlauf nacheinander verändert um die jeweils zugeordneten Achsparameterwerte abzufragen, der Abstand zwischen den Stützorten umgekehrt proportional zur gewünschten Bahngeschwindigkeit (v) gedehnt wird.

4. Verfahren nach einem der vorstehenden Ansprüche, **dadurch gekennzeichnet,** daß die tatsächliche Bahnlänge (L) zwischen den Raumpunkten (P1,P2,P3 und P4) als Parameter in ein jeweiliges den Betrieb steuerndes Programm eingegeben wird.

**Claims**

1. Method for the operation of a numerically controlled machine tool or a robot, wherein smooth interpolatable path sections are formed taking several successive spatial points as the basis, with the aid of their axis parameter values, as supporting sites in each case, which path sections, when linked together, specify the desired course of a required movement path, wherein the desired course for each axis indicates the respective axis parameter as dependent variable of a path-length parameter of the required movement path, characterized in that the step width (delta s) under which the respective path parameters (s) are successively altered according to the desired courses, is reduced with increasing path speed (v) in order to scan the respectively associated axis parameter values.

2. Method for the operation of a numerically controlled machine tool or a robot, wherein smooth interpolatable path sections are formed taking several successive spatial points as the basis, with the aid of their axis parameter values, as supporting sites in each case, which path sections, when linked together, specify the desired course of a required movement path, wherein the desired course for each axis indicates the respective axis parameter as dependent variable of a path-length parameter of the required movement path, characterized in that in order to scan the respectively associated axis parameter values, while maintaining a constant step width (delta s) under which the respective path parameters (s) are successively altered according to the desired courses, the respective desired course corresponding to a desired speed profile is extended over the course of the path-length parameter in inverse proportion to the desired path speed.

3. Method for the operation of a numerically controlled machine tool or a robot, wherein smooth interpolatable path sections are formed taking several successive spatial points as the basis, with the aid of their axis parameter values, as supporting sites in each case, which path sections, when linked together, specify the desired course of a required movement path, wherein the desired course for each axis indicates the respective axis parameter as dependent variable of a path-length parameter of the required movement path, characterized in that in order to scan the respectively associated axis parameter values, while maintaining a constant step width (delta s) under which the respective path parameters are successively altered according to the desired course, the distance between the supporting sites is extended in inverse proportion to the desired path speed (v).

4. Method according to one of the above claims, characterized in that the actual path length (L) between the space points (P1,P2,P3 and P4) is entered as parameter into a respective program which controls the operation.

**Revendications**

1. Procédé pour faire fonctionner une machine-outil à commande numérique ou un robot, selon lequel en prenant respectivement comme références plusieurs points successifs dans l'espace, des sections unies de trajectoire, pouvant être interpolées en tant que lieux d'assistance, sont formées sur la base des valeurs des paramètres d'axe desdits points de l'espace, sections de trajectoire qui, au moyen de leur chaînage, prédéterminent la configuration de consigne d'une trajectoire de déplacement que l'on cherche à obtenir, la configuration de consigne indiquant pour chaque axe le paramètre d'axe respectif sous la forme d'une variable dépendante d'un paramètre de longueur de la trajectoire de déplacement recherché, caractérisé par le fait que le pas (delta s), avec lequel les paramètres respectifs de trajectoire (s) sont modifiés successivement en fonction des configurations de consigne, pour l'interrogation des valeurs respectivement associées des paramètres d'axe, est réduit lorsque la vitesse (v) de la trajectoire augmente.

2. Procédé pour faire fonctionner une machine-outil à commande numérique ou un robot, selon lequel en prenant respectivement comme références plusieurs points successifs dans l'espace, des sections unies de trajectoire, pouvant être interpolées, en tant que lieux d'assistance, sont formées sur la base des valeurs des paramètres d'axe desdits points de l'espace, sections de trajectoire qui, au moyen de leur chaînage, prédéterminent la configuration de consigne d'une trajectoire de déplacement que l'on cherche à obtenir, la configuration de consigne indiquant pour chaque axe le paramètre d'axe respectif sous la forme d'une variable dépendante d'un paramètre de longueur de la trajectoire de déplacement recherché, caractérisé par le fait que tout en conservant un pas (delta s) constant, dont les paramètres respectifs de trajectoire (s) sont modifiés successivement en fonction des allures de consigne, pour l'interrogation des valeurs respectivement associées de paramètres d'axe, l'allure de consigne respective est dilatée conformément à un profil de vitesse désiré, par rapport à l'allure du paramètre de longueur de trajectoire, d'une manière inversement proportionnelle à la vitesse désirée sur la trajectoire.

3. Procédé pour faire fonctionner une machine-outil à commande numérique ou un robot, selon lequel en prenant respectivement comme références plusieurs points successifs dans l'espace, des sections unies de trajectoire, pouvant être interpolées en tant que lieux d'assistance, sont formées sur la base des valeurs des paramètres d'axe desdits points de l'espace, sections de trajectoire qui, au moyen de leur chaînage, prédéterminent la configuration de consigne d'une trajectoire de déplacement que l'on cherche à obtenir, la configuration de consigne indiquant pour chaque axe le paramètre d'axe respectif sous la forme d'une variable dépendante d'un paramètre de longueur de la trajectoire de déplacement recherché, caractérisé par le fait que tout en conservant un pas (delta s) constant, avec lequel les paramètres respectifs de trajectoire sont modifiés successivement en fonction de l'allure de consigne pour l'interrogation des valeurs respectivement associées du paramètre d'axe, la distance entre les lieux d'assistance est dilatée d'une manière inversement proportionnelle à la vitesse désirée (v) sur la trajectoire.

4. Procédé suivant l'une des revendications précédentes, caractérisé par le fait que la longueur effective de trajectoire (L) entre les points de l'espace (P1,P2,P3 et P4) est introduite comme paramètre dans un programme respectif, qui commande le fonctionnement.

FIG 1

FIG 2

| | P4 | P3 | P2 | P1 |
|---|---|---|---|---|
| x | 12 | 12,5 | 12,8 | 12,5 |
| y | 8 | 7,2 | 6 | 5 |
| s | 0 | 0,94 | 2,18 | 3,22 |

FIG 3

**FIG 4**

$$v = \sqrt{v_x^2 + v_y^2}$$

**FIG 5**

| N0 | x | 10 | | | → $S_0 = 30$ |
| N1 | x | 20 | F100 | | → $S_1 = 20$ |
| N2 | x | 30 | F50 | | → $S_2 = 10$ |
| N3 | x | 40 | F100 | | → $S_3 = 0$ |

**FIG 6**

| $N0^*$ | x | 10 | | | → $S_0^* = 40$ |
| $N1^*$ | x | 20 | L10 | F100 | → $S_1^* = 30$ |
| $N2^*$ | x | 30 | L20 | F100 | → $S_2^* = 10$ |
| $N3^*$ | x | 40 | L10 | F100 | → $S_3^* = 0$ |

**FIG 7**

$$x = -0,00083\, s^{*3} + 0,05\, s^{*2} - 1,417\, s^{*} + 40$$

$$x = -s + 40$$

**FIG 8**

**FIG 9**